# FASCICULE DE BREVET EUROPEEN

(11) **EP 3 997 507 B1**
(45) Date de publication et mention de la délivrance du brevet: **25.09.2024**
(21) Numéro de dépôt: 20750338.4
(22) Date de dépôt: 09.07.2020
(51) Int. Cl.: H04N 23/951, G02B 23/12, G02B 27/01, G01C 19/00

(54) **APPAREIL DE VISION NOCTURNE DE TYPE NUMERIQUE AVEC VITESSE D'ACQUISITION D'IMAGE AJUSTABLE**
DIGITALES NACHTSICHTGERÄT MIT EINSTELLBARER BILDAUFNAHMEGESCHWINDIGKEIT
DIGITAL NOCTURNAL VISION APPARATUS WITH ADJUSTABLE IMAGE ACQUISITION SPEED

(30) Priorité: 10.07.2019 FR 1907714
(43) Date de publication de la demande: 18.05.2022
(73) Titulaire: Photonis France, 19100 Brive (FR)
(72) Inventeur: DELTEL, Geoffroy, 19100 BRIVE (FR)
(74) Mandataire: Cabinet Laurent & Charras
(86) Numéro de dépôt international: PCT/FR2020/051230
(87) Numéro de publication internationale: WO 2021/005309

(56) Documents cités:
- US-A1- 2011 205 368
- US-A1- 2018 075 654

## Description

### DOMAINE TECHNIQUE

L'invention se rapporte au domaine des appareils de vision nocturne de type numérique.

### ÉTAT DE LA TECHNIQUE ANTÉRIEURE

On connaît dans l'art antérieur deux grandes familles d'appareils de vision nocturne, destinés à être montés sur la tête d'un utilisateur pour lui permettre d'observer en temps réel une scène environnante malgré un faible éclairage de cette scène.

Une première famille d'appareils de vision nocturnes regroupe les appareils de type analogique, fondés sur la technologie de l'intensification d'image. Cette technologie utilise un tube intensificateur d'images, comprenant une photocathode adaptée à convertir un flux incident de photons en un flux initial d'électrons. Ce flux initial d'électrons se propage jusqu'à des moyens de multiplication. Chaque électron incident sur les moyens de multiplication provoque l'émission de plusieurs électrons secondaires. On génère ainsi un flux intense d'électrons. Le flux intense d'électrons est reçu par un écran phosphore, qui convertit ce flux intense d'électrons en un flux intense de photons. Ce flux intense de photons correspond au flux de photons incident sur la photocathode, mais en plus intense. Un temps de latence, entre une variation de la scène environnante et sa traduction sur l'image formée par l'appareil de vision nocturne, est de l'ordre de seulement une milliseconde.

Une seconde famille d'appareils de vision nocturne (ou bas niveau de lumière) regroupe les appareils de type numérique, fondés sur une acquisition d'image à l'aide d'une matrice de capteurs, et une restitution de l'image acquise, sur un écran d'affichage. La matrice de capteurs convertit un flux optique incident en signaux électriques. Les signaux électriques sont ensuite transférés à un écran d'affichage, par exemple de type écran à cristaux liquides, pour l'affichage d'une image représentative de la répartition du flux optique incident sur la matrice de capteurs. La matrice de capteurs est formée de capteurs sensibles dans le visible et/ou l'infrarouge, pour l'acquisition d'une image (intensifiée ou non) d'une scène peu éclairée, ou une image infrarouge de cette scène.

La compatibilité de cette seconde technologie avec une utilisation en mouvement, et notamment avec son emport sur la tête d'un utilisateur, est limitée par un sentiment de nausée pouvant être ressenti par l'utilisateur. Ce sentiment de nausée est induit, entre autre, par un temps de latence entre une variation de la scène environnante et sa traduction sur l'image formée sur l'écran d'affichage. Le temps de latence est lié à une fréquence d'acquisition d'image par la matrice de capteurs. Cette fréquence d'acquisition est généralement égale à 25 Hz, ou environ 50 Hz, ce qui correspond à un temps de latence de 40 ms, ou environ 20 ms. Ce temps de latence élevé provoque une sensation de malaise pour l'utilisateur lorsque sa tête bouge relativement à la scène environnante, et en particulier lorsqu'il tourne la tête.

Le document US-A-2011/0205368 décrit un dispositif de vision nocturne ne possédant pas de pilotage de la fréquence d'acquisition d'image en fonction d'une vitesse relative de la scène environnante.

Le document US-A-2018/0075654 concerne des lunettes de réalité virtuelle réduisant la vitesse de rafraîchissement d'image lorsque l'utilisateur ne bouge pas la tête et que la scène est statique.

Un objectif de la présente invention est de proposer un appareil de vision nocturne de type numérique, permettant d'éviter toute sensation de malaise pour l'utilisateur lorsque sa tête bouge relativement à la scène environnante, et en particulier lorsqu'il tourne la tête.

### PRÉSENTATION DE L'INVENTION

Cet objectif est atteint avec un appareil de vision nocturne destiné à être monté sur la tête d'un utilisateur, et comprenant :
- au moins une matrice de capteurs ; et
- un écran d'affichage configuré pour afficher une image obtenue à l'aide de la matrice de capteurs.

Selon l'invention, l'appareil de vision nocturne comprend en outre :
- un dispositif de mesure de vitesse, monté solidaire d'un ensemble comprenant au moins la matrice de capteurs et l'écran d'affichage ; et
- un dispositif de pilotage, configuré pour recevoir en entrée au moins une mesure de vitesse fournie par le dispositif de mesure de vitesse, et pour piloter en réponse une fréquence d'acquisition d'image par la matrice de capteurs, de sorte que la fréquence d'acquisition d'image augmente lorsque ladite mesure de vitesse augmente.

Dans le contexte d'un appareil de vision nocturne de type numérique, on comprend que la matrice de capteurs comprend des capteurs hautement sensibles dans le spectre visible et/ou des capteurs sensibles dans l'infrarouge, pour l'acquisition d'une image d'une scène peu éclairée et/ou d'une image infrarouge de cette scène. L'infrarouge désigne plus particulièrement une gamme de longueurs d'onde allant de 700 nm à 0,1 mm.

Une solution évidente, pour éviter toute sensation de malaise pour l'utilisateur lorsque sa tête bouge relativement à la scène environnante, aurait consisté à réduire le temps de latence, quelles que soient les conditions d'utilisation de l'appareil de vision nocturne. Cependant, un faible temps de latence, et donc une fréquence rapide d'acquisition par la matrice de capteurs, induit un temps d'intégration faible pour lesdits capteurs ce qui est en contradiction avec la haute sensibilité requise dans le contexte d'un appareil de vision nocturne.

L'idée à la base de l'invention consiste à remarquer que, lorsque la tête de l'utilisateur est en mouvement relativement à la scène environnante, l'utilisateur porte peu d'attention aux détails de l'image qu'il voit sur l'écran d'affichage. On peut alors tolérer une dégradation de la qualité de cette image, en comparaison avec les périodes où la tête de l'utilisateur est immobile ou presque relativement à la scène environnante.

L'appareil de vision nocturne selon l'invention est donc configuré pour adapter la fréquence d'acquisition d'image par la matrice de capteurs à la vitesse d'un mouvement de la tête de l'utilisateur relativement à ladite scène environnante. Lorsque la tête de l'utilisateur est immobile ou presque relativement à la scène environnante, la fréquence d'acquisition d'image est lente, ce qui permet d'acquérir une image de bonne qualité de la scène environnante malgré de mauvaises conditions d'éclairage (temps d'intégration élevé des capteurs de la matrice de capteurs, et donc bon rapport signal sur bruit). Lorsque la tête de l'utilisateur est en mouvement relativement à la scène environnante, la fréquence d'acquisition d'image augmente, ce qui permet d'éviter toute sensation de malaise pour l'utilisateur. Cette augmentation de la fréquence d'acquisition d'image se traduit par une perte de qualité sur l'image acquise par la matrice de capteurs. Cependant, pour les raisons mentionnées ci-dessus, cette perte de qualité est tolérée puisqu'elle se produit uniquement lorsque la tête de l'utilisateur est en mouvement relativement à la scène environnante.

L'invention propose ainsi un appareil de vision nocturne de type numérique, qui permet d'éviter toute sensation de malaise pour l'utilisateur lorsque sa tête bouge relativement à la scène environnante, sans diminuer une perception de qualité de la vision nocturne offerte par l'appareil.

Des caractéristiques optionnelles de l'invention sont mentionnées dans les revendications dépendantes.

L'invention couvre également un procédé d'ajustement d'une fréquence d'acquisition d'image mis en oeuvre dans un appareil de vision nocturne selon l'invention, monté sur la tête d'un utilisateur, le procédé comprenant les étapes suivantes :
- à l'aide du dispositif de mesure de vitesse, mesure d'au moins une vitesse de l'ensemble comprenant au moins la matrice de capteurs et l'écran d'affichage ;
- à l'aide du dispositif de pilotage, pilotage de la fréquence d'acquisition d'image par la matrice de capteurs de sorte que la fréquence d'acquisition d'image augmente lorsque ladite mesure de vitesse augmente.

### BRÈVE DESCRIPTION DES FIGURES

La présente invention sera mieux comprise à la lecture de la description d'exemples de réalisation donnés à titre purement indicatif et nullement limitatif, en faisant référence aux dessins annexés sur lesquels :
[Fig. 1A] illustre de façon schématique un appareil de vision nocturne selon l'invention, monté sur la tête d'un utilisateur ;
[Fig. 1B] illustre de façon schématique un appareil de vision nocturne selon l'invention ;
[Fig. 2A] illustre de façon schématique un premier mode de réalisation d'un procédé mis en oeuvre dans un appareil de vision nocturne selon l'invention ;
[Fig. 2B] illustre de façon schématique un deuxième mode de réalisation d'un procédé mis en oeuvre dans un appareil de vision nocturne selon l'invention ;
[Fig. 2C] illustre de façon schématique un troisième mode de réalisation d'un procédé mis en oeuvre dans un appareil de vision nocturne selon l'invention ; et
[Fig. 3] illustre de façon schématique une acquisition d'image dans l'appareil de vision nocturne selon l'invention, lorsque la tête de l'utilisateur est en mouvement.

### DESCRIPTION DES MODES DE RÉALISATION

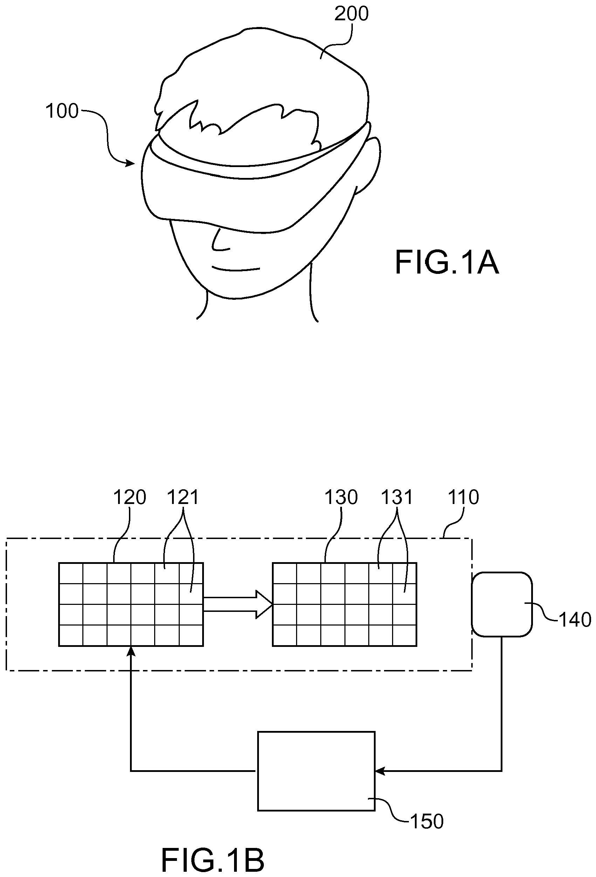

La figure 1A illustre, de manière schématique, un appareil de vision nocturne 100 selon l'invention monté sur la tête d'un utilisateur 200. L'appareil de vision nocturne 100 forme un dispositif portatif, apte à être monté sur la tête de l'utilisateur 200 en recouvrant au moins une partie de son visage à hauteur des yeux. L'appareil de vision nocturne 100 se présente par exemple sous la forme de lunettes, d'un masque ou d'un casque intégrant les éléments de l'appareil de vision nocturne. En utilisation, l'appareil de vision nocturne 100 est fixe relativement à la tête de l'utilisateur 200.

La figure 1B illustre de façon schématique l'appareil de vision nocturne 100. L'appareil de vision nocturne 100 comprend en particulier un module de transduction 110 réalisant la transduction d'une répartition de signal lumineux dans une scène environnante en une image apte à être vue par l'utilisateur.

Le module de transduction 110 comporte ici une matrice de capteurs 120 et un écran d'affichage 130.

La matrice de capteurs 120 comporte une pluralité de capteurs 121, répartis selon un maillage régulier, par exemple mais de manière non limitative selon des lignes et des colonnes.

Les capteurs 121 sont chacun apte à convertir un flux lumineux incident en un signal électrique.

Les capteurs 121 peuvent comprendre des capteurs à haute sensibilité, sensibles dans le spectre visible (entre 400 nm et 700 nm), et/ou des capteurs sensibles dans l'infrarouge, sensibles par exemple sur une bande spectrale allant de 700 nm à 1700 nm, ou allant de 700 nm à 1100 nm, ou allant de 700 nm à 900 nm, ou allant de 8 µm à 12 µm.

Chaque capteur 121 peut être formé par :
- un capteur CMOS dit BNL, pour bas niveau de lumière, apte à détecter des rayonnements lumineux de très faible intensité ; ou
- un capteur dit EB-CMOS, pour capteur CMOS à bombardement électronique, comportant une photocathode pour convertir un flux incident de photons en un flux d'électrons et un capteur CMOS apte à convertir un flux incident d'électrons en un signal électrique de mesure ; ou
- un capteur dit I-CMOS, pour capteur CMOS intensifié ; ou
- une photodiode infrarouge ; etc.

La matrice de capteurs 120 peut comprendre plusieurs types de capteurs, qui diffèrent par exemple par leur bande spectrale de sensibilité, et répartis en plusieurs matrices élémentaires entrelacées ou même juxtaposées. Selon une variante non représentée, l'appareil de vision nocturne selon l'invention comprendre plusieurs matrices de capteurs distinctes et juxtaposées, qui diffèrent par le type de capteurs dont elles sont composées, où les différents types de capteurs se distinguent les uns des autres par leur bande spectrale de sensibilité. Dans ces deux variantes, l'au moins une matrice de capteurs est reliée à un module de traitement, configuré pour recevoir en entrée les signaux électriques fournis par chacun des capteurs de l'au moins une matrice de capteurs et pour former, à l'aide de ces signaux, une image dite fusionnée regroupant des données relatives à différentes bandes spectrales de détection.

L'écran d'affichage 130 est relié à la matrice de capteurs 120, et configuré pour afficher une image en lumière visible en réponse à la réception de signaux électrique en provenance directe ou indirecte de la matrice de capteurs. L'écran d'affichage émet en particulier à des longueurs d'onde allant de 400 nm à 700 nm.

De préférence, l'écran d'affichage 130 est configuré pour afficher une image en niveaux de gris. Une image en niveaux de gris est constituée de pixels qui ne diffèrent que par leur intensité lumineuse. En pratique, l'image dite en niveaux de gris peut apparaître en vert. L'écran d'affichage 130 est par exemple un écran à cristaux liquides (LCD).

Ici, l'écran d'affichage 130 est configuré pour recevoir en entrée des signaux électriques fournis directement par la matrice de capteurs 120. Selon une variante non représentée, l'écran d'affichage 130 est configuré pour recevoir en entrée des signaux électriques provenant indirectement de l'au moins une matrice de capteurs. Lesdits signaux électriques sont fournis alors par un module de traitement, ou processeur, qui transforme des premiers signaux électriques, fournis en sortie de l'au moins une matrice de capteurs, en second signaux électriques, envoyés à l'écran 130. Ledit module de traitement est par exemple un module de traitement tel que mentionné ci-dessus, configuré pour fusionner des données se rapportant à différentes plages spectrales de détection. En particulier, la matrice de capteurs 120 peut comporter différents types de capteurs qui diffèrent par leurs plages spectrales respectives de sensibilité, et le module de traitement est configuré pour fusionner des données provenant de chaque type de capteur selon un algorithme dédié. L'image fusionnée ainsi générée est affichée par l'écran 130.

L'appareil de vision nocturne 100 forme ainsi un appareil de type numérique, basé sur une détection de type numérique d'une scène faiblement éclairée.

De nombreuses variantes du module de transduction 110 peuvent être mises en oeuvre sans sortir du cadre de l'invention. Par exemple, la matrice de capteurs peut comprendre des capteurs dont la plage de sensibilité spectrale s'étend non seulement dans l'infrarouge, mais également en dehors du spectre infrarouge. La matrice de capteurs peut comprendre des capteurs de différents types, qui diffèrent par leurs plages respectives de sensibilité spectrale. En variante, tous les capteurs de la matrice de capteurs sont des capteurs du même type, notamment des capteurs à haute sensibilité sensibles dans le visible ou des capteurs sensibles sur une même bande spectrale appartenant à l'infrarouge. Selon d'autres variantes, la matrice de capteurs comporte également des capteurs sensibles dans le visible (entre 400 nm et 700 nm) et/ou des capteurs sensibles dans le proche ultra-violet (entre 200 nm et 400 nm) et/ou des capteurs sensibles dans l'ultra-violet (entre 10 nm et 200 nm), avec de préférence une majorité des capteurs de la matrice de capteurs qui sont des capteurs sensibles dans l'infrarouge ou des capteurs à haute sensibilité.

Selon l'invention, l'appareil de vision nocturne 100 comprend en outre un dispositif de mesure de vitesse 140, et un dispositif de pilotage 150 pour piloter la fréquence d'acquisition d'image par la matrice de capteurs 120.

Le dispositif de mesure de vitesse 140 est monté solidaire d'un ensemble comportant au moins la matrice de capteurs 120 et l'écran 130.

En fonctionnement, lorsque l'appareil de vision nocturne 100 est positionné sur la tête de l'utilisateur, le dispositif de mesure de vitesse 140 permet donc de mesurer une vitesse de déplacement de la tête de l'utilisateur relativement au référentiel terrestre.

Le dispositif de mesure de vitesse 140 est configuré pour mesurer au moins une vitesse linéaire et/ou au moins une vitesse de rotation. Il peut comprendre au moins un capteur de vitesse linéaire, de type accéléromètre, et/ou au moins un capteur de vitesse de rotation, de type gyromètre. Il comprend par exemple trois capteurs de vitesse linéaire, pour mesurer une vitesse linéaire selon chacun des trois axes d'un repère orthonormé, et trois capteurs de vitesse de rotation, pour mesurer une vitesse de rotation autour de chacun de ces trois axes. Lorsqu'il comprend plusieurs capteurs de vitesse, le dispositif de mesure de vitesse 140 comporte avantageusement un processeur configuré pour combiner les mesures fournies par chacun de ces capteurs de manière à fournir en sortie une unique mesure de vitesse.

Le dispositif de pilotage 150 comprend de préférence une unité centrale ayant un processeur mettant en oeuvre des programmes enregistrés dans une mémoire. Le dispositif de pilotage 150 est configuré pour :
- recevoir en entrée une mesure de vitesse fournie par le dispositif de mesure de vitesse 140 ;
- réaliser un traitement de cette mesure de vitesse de manière à déterminer une valeur de consigne relative à la fréquence d'acquisition d'image par la matrice de capteurs 120 (respectivement par chacune des matrices de capteurs, lorsqu'il y en a plusieurs comme mentionné ci-dessus) ; et
- fixer la fréquence d'acquisition d'image par la matrice de capteurs 120 à ladite valeur de consigne (respectivement la fréquence d'acquisition d'image par chacune des matrices de capteurs, lorsqu'il y en a plusieurs comme mentionné ci-dessus).

La fréquence d'acquisition d'image par la matrice de capteurs 120 est un nombre d'images par unité de temps qui traduit la vitesse à laquelle la matrice de capteurs 120 transforme une répartition de signal lumineux dans la scène environnante en une répartition de signaux électriques. Cette fréquence est égale à l'inverse de la durée nécessaire pour que ladite matrice acquière une image donnée de la scène environnante.

Selon l'invention, le dispositif de pilotage 150 est configuré pour définir ladite valeur de consigne de sorte qu'une valeur élevée de la vitesse mesurée par le capteur de vitesse corresponde à une fréquence élevée d'acquisition d'image par la matrice de capteurs, et inversement. Ainsi, lorsque la tête de l'utilisateur est en mouvement, la fréquence d'acquisition d'image par la matrice de capteurs 120 est augmentée ce qui évite toute sensation de malaise pour l'utilisateur.

De préférence, la matrice de capteurs 120 est une matrice de capteurs conventionnelle dans le domaine de la vision nocturne, prévue pour fonctionner à une fréquence nominale d'acquisition d'image inférieure à 100 Hz, par exemple 50 Hz ou 25 Hz.

Lorsque la tête de l'utilisateur est immobile relativement à la scène environnante, la fréquence d'acquisition d'image par la matrice de capteurs est égale à ladite fréquence nominale d'acquisition d'image, ce qui permet l'acquisition d'images de bonne qualité.

Lorsque la tête de l'utilisateur est en mouvement relativement à la scène environnante, par exemple lorsque l'utilisateur tourne, lève ou baisse la tête, la fréquence d'acquisition d'image par la matrice de capteurs est fortement augmentée, pour éviter toute sensation de malaise pour l'utilisateur. L'image acquise par la matrice de capteurs est alors une image dégradée. Cependant, cette dégradation d'image intervient à des instants auxquels l'utilisateur n'est pas attentif à la qualité de l'image qu'il voit.

L'invention permet ainsi d'éviter toute sensation de malaise pour l'utilisateur lorsque sa tête est en mouvement relativement à la scène environnante, tout en utilisant une matrice de capteurs conventionnelle présentant un coût de revient raisonnable. En outre, la fréquence d'acquisition d'image par la matrice de capteurs n'étant augmentée que durant certains intervalles de temps bien définis, la consommation énergétique moyenne de l'appareil de vision nocturne selon l'invention reste limitée.

La fréquence d'acquisition d'image par la matrice de capteurs peut atteindre des valeurs allant jusqu'à 1 kHz, correspondant à un temps de latence du même ordre de grandeur que le temps de latence des appareils de vision nocturne de type analogique.

A chaque instant, la fréquence de rafraîchissement d'image sur l'écran 130 est au moins égale à la fréquence d'acquisition d'image par la matrice de capteurs 120. De manière avantageuse, la fréquence de rafraîchissement de l'image affichée par l'écran 130 est décorrellée de la fréquence d'acquisition d'image par la matrice de capteurs. L'écran 130 peut alors présenter une fréquence de rafraîchissement d'image constante, supérieure ou égale à la valeur maximale de la fréquence d'acquisition d'image par la matrice de capteurs 120. On améliore ainsi un confort visuel de l'utilisateur, tout en s'assurant que les images vues par l'utilisateur se succèdent à une fréquence permettant d'éviter toute sensation de malaise en cas de mouvement de la tête de l'utilisateur relativement à la scène environnante.

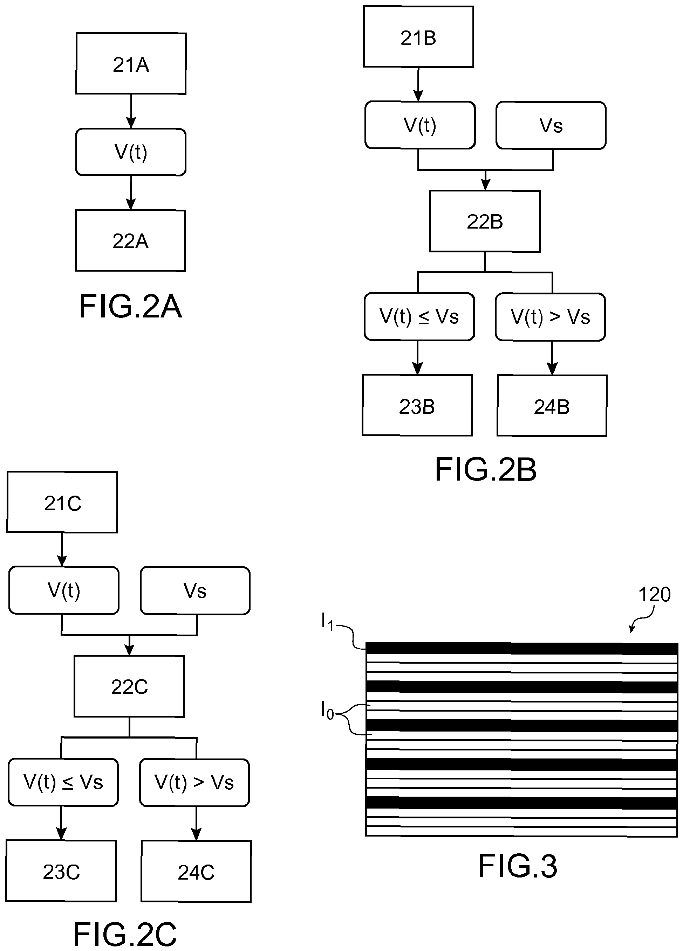

La figure 2A illustre de façon schématique un premier mode de réalisation d'un procédé mis en oeuvre dans un appareil de vision nocturne tel qu'illustré en figure 1B.

Dans une première étape 21A, le dispositif de mesure de vitesse 140 mesure une vitesse V(t) de l'ensemble comprenant au moins la matrice de capteurs 120 et l'écran d'affichage 130, et fournit cette mesure de vitesse V(t) au dispositif de pilotage 150. La vitesse V(t) peut être une combinaison de plusieurs vitesses mesurées par plusieurs capteurs de vitesse du dispositif de mesure de vitesse 140.

Dans une seconde étape 22A, le dispositif de pilotage 150 utilise ladite mesure de vitesse V(t) pour définir une valeur de consigne pour la fréquence d'acquisition d'image par la matrice de capteurs, et fixe la fréquence d'acquisition d'image par la matrice de capteurs 120 à ladite valeur de consigne. Ladite valeur de consigne peut être une fonction linéaire de la mesure de vitesse V(t).

La figure 2B illustre de façon schématique un deuxième mode de réalisation d'un procédé mis en oeuvre dans un appareil de vision nocturne tel qu'illustré en figure 1B.

La première étape 21B correspond à l'étape 21A décrite en référence à la figure 2A.

Dans une seconde étape 22B, le dispositif de pilotage 150 compare la mesure de vitesse V(t) avec une valeur seuil de vitesse Vs. Ladite valeur de seuil Vs est stockée de préférence dans une mémoire du dispositif de pilotage 150.

Lorsque le dispositif de pilotage 150 détermine que la mesure de vitesse V(t) est inférieure ou égale à la valeur seuil de vitesse Vs, il définit une valeur de consigne correspondant à une première valeur basse prédéterminée Fb1, et fixe la fréquence d'acquisition d'image par la matrice de capteurs 120 à ladite valeur de consigne (étape 23B).

Lorsque le dispositif de pilotage 150 détermine au contraire que la mesure de vitesse V(t) est supérieure à la valeur seuil de vitesse Vs, il définit une valeur de consigne qui dépend de la mesure de vitesse V(t), et fixe la fréquence d'acquisition d'image par la matrice de capteurs 120 à ladite valeur de consigne (étape 23B). La relation entre ladite valeur de consigne et la mesure de vitesse V(t) peut être linéaire, mais pas nécessairement.

On réalise ainsi une stabilisation de la fréquence d'acquisition d'image, permettant de négliger des mouvements lents non susceptibles de créer une sensation de malaise pour l'utilisateur, ou trop lents pour autoriser une dégradation de l'image vue par l'utilisateur.

La figure 2C illustre de façon schématique un troisième mode de réalisation d'un procédé selon l'invention qui n'est décrit que pour ses différences relativement au procédé de la figure 2B.

Les étapes 21C à 23C correspondent respectivement aux étapes 21B à 23B décrites en référence à la figure 2B.

Lorsque le dispositif de pilotage 150 détermine que la mesure de vitesse V(t) est supérieure à la valeur seuil de vitesse Vs, il définit une valeur de consigne correspondant à une valeur haute prédéterminée Fh strictement supérieure à Fb1, et fixe la fréquence d'acquisition d'image par la matrice de capteurs 120 à ladite valeur de consigne (étape 23C).

Ce mode de réalisation est particulièrement simple en ce qu'il ne comporte que deux modes de fonctionnement associés chacun à une unique valeur de la fréquence d'acquisition d'image par la matrice de capteurs.

Selon une variante avantageuse, le dispositif de pilotage selon l'invention peut être configuré pour déterminer une durée courante d'un mouvement en cours de réalisation, de la tête de l'utilisateur relativement à la scène environnante. Il s'agit en d'autres termes de déterminer en temps réel le temps écoulé à compter du début d'un mouvement de la tête de l'utilisateur relativement à la scène environnante. Cette durée est déterminée à l'aide des mesures fournies par le dispositif de mesure de vitesse, en considérant que le mouvement débute lorsque la mesure de vitesse est supérieure à un seuil de vitesse prédéterminé, et que ce mouvement se poursuit tant que la mesure de vitesse est supérieure à ce seuil de vitesse prédéterminé.

Le dispositif de pilotage 150 est configuré pour comparer à chaque instant cette durée avec une valeur seuil de durée, et pour fixer la fréquence d'acquisition d'image à une seconde valeur basse Fb2 tant que la durée courante du mouvement est inférieure à la valeur seuil de durée. La première valeur seuil Fb1 et la seconde valeur seuil Fb2 peuvent être identiques ou distinctes.

On réalise ainsi une stabilisation permettant de négliger des mouvements se faisant sur une durée particulièrement courte, liés par exemple à un tic de l'utilisateur.

L'augmentation de la fréquence d'acquisition d'image par la matrice de capteurs peut se traduire par une diminution d'un temps d'intégration pour des capteurs de ladite matrice (durée durant laquelle un capteur est exposé à un signal lumineux incident). Chacun de ces capteurs intègre alors moins de signal lumineux, et fournit donc en sortie un signal électrique plus faible. Afin que l'image affichée ensuite par l'écran 130 ne soit pas trop sombre, il est donc avantageux d'augmenter la luminosité de l'écran pour compenser cette diminution du temps d'intégration. Le dispositif de pilotage 150 est alors configuré pour piloter en outre une luminosité de l'affichage par l'écran 130. En particulier, le dispositif de pilotage 150 est configuré pour augmenter cette luminosité en même temps qu'il augmente la fréquence d'acquisition d'image par la matrice de capteurs, et inversement. L'augmentation de la luminosité de l'écran correspond à une amplification des signaux électriques reçus en entrée par cet écran. L'image affichée par l'écran 130 reste de moins bonne qualité, notamment en termes de contraste, mais elle présente une luminosité offrant un bon confort visuel, semblable à la luminosité de l'image affichée par l'écran en l'absence de mouvement de la tête de l'utilisateur (pas de sensation de changement de luminosité pour l'utilisateur).

Selon une autre variante avantageuse, le dispositif de pilotage 150 peut être configuré pour ajuster un nombre de capteurs lus sur la matrice de capteurs. Le dispositif de pilotage 150 est configuré alors pour réduire ce nombre de capteurs lus en même temps qu'il augmente la fréquence d'acquisition d'image par la matrice de capteurs, et inversement. On peut ainsi réduire la consommation électrique liée à l'acquisition d'une image donnée par la matrice de capteurs, et ainsi compenser au moins en partie une augmentation de la consommation électrique de l'appareil de vision nocturne liée à l'augmentation de la fréquence d'acquisition d'une image par la matrice de capteurs. La diminution du nombre de capteurs lus correspond à une détérioration de la résolution de l'image acquise à l'aide de la matrice de capteurs. Cette détérioration de la résolution se produit cependant aux instants où l'utilisateur est peu sensible à la qualité de l'image qu'il voit.

Les capteurs lus sont répartis à intervalles réguliers sur la matrice de capteurs 120. On lit par exemple une ligne de capteurs toutes les N lignes de capteurs, avec N un entier supérieur ou égal à 2. La figure 3 représente de façon schématique la matrice de capteurs 120 de l'appareil de vision nocturne selon l'invention, avec les lignes de capteurs I₁ lues (en noir), et les lignes de capteurs I₀ non lues (en blanc), lorsque la tête de l'utilisateur est en mouvement relativement à la scène environnante. En variante, on lit un capteur par groupe de M capteurs adjacents, avec M un entier supérieur ou égal à 2. On peut lire en alternance les différents capteurs de la matrice de capteurs, de sorte qu'à chaque acquisition d'image on ne lit qu'une partie des capteurs de la matrice de capteurs, et qu'après J acquisitions d'images tous les capteurs de la matrice de capteurs ont été lus au moins une fois, avec J entier supérieur ou égal à 2. Dans tout le texte, les termes « ligne » et « colonne » peuvent être intervertis.

La matrice de capteurs peut être une matrice de capteurs à obturateur global, dans laquelle tous les capteurs sont exposés simultanément à la lumière environnante (intégration), puis obturés ensemble pour la lecture de leurs signaux électriques respectifs.

En variante, la matrice de capteurs peut être une matrice de capteurs à obturateur roulant (« rolling shutter », en anglais), dans laquelle les lignes de capteurs sont exposées les unes après les autres à la lumière environnante et les signaux électriques d'une ligne de capteurs sont lus en même temps qu'une ligne de capteurs suivante est exposée. Dans ce cas, la diminution du nombre de lignes de capteurs lues sur la matrice de capteurs se traduit automatiquement par une diminution de la durée d'acquisition d'une image par la matrice de capteurs. En d'autres termes, la diminution du nombre de lignes de capteurs lues sur la matrice de capteurs se traduit alors automatiquement par une augmentation de la fréquence d'acquisition d'image par la matrice de capteurs. De manière avantageuse, le dispositif de pilotage selon l'invention est alors configuré pour piloter la fréquence d'acquisition d'image par la matrice de capteurs *via* le pilotage du nombre de lignes de capteurs lues sur ladite matrice de capteurs (1 lignes toutes les N lignes de capteurs, avec N un entier supérieur ou égal à 2). L'augmentation de la fréquence d'acquisition d'image par la matrice de capteurs est alors automatiquement accompagnée d'une compensation au moins partielle de l'augmentation correspondante de la consommation électrique de l'appareil de vision nocturne. On remarque que dans ce mode de réalisation, l'augmentation de la fréquence d'acquisition d'image par la matrice de capteurs se traduit par une baisse de la résolution de l'image acquise, mais pas par une baisse de sa luminosité.

En complément ou en variante, le dispositif de pilotage 150 peut être configuré pour ajuster en outre un nombre de pixels activés sur l'écran 130. Le dispositif de pilotage 150 est configuré alors pour réduire ce nombre de pixels activés en même temps qu'il augmente la fréquence d'acquisition d'image par la matrice de capteurs, et inversement. On peut ainsi compenser au moins partiellement l'augmentation de consommation électrique de l'appareil de vision nocturne associée à l'augmentation de la fréquence d'acquisition d'image par la matrice de capteurs. On peut n'activer que les pixels de l'écran 130 associés à des capteurs lus de la matrice de capteurs. En variante, le nombre de pixels activés sur l'écran 130 est décorrellé du nombre de capteurs lus sur la matrice de capteurs.

Selon d'autres variantes encore, l'appareil de vision nocturne selon l'invention comporte un élément de mesure de luminosité, configuré pour acquérir une mesure de la luminosité ambiante dans un environnent externe de l'appareil de vision nocturne. Le dispositif de pilotage 150 est alors configuré pour recevoir en entrée une mesure de luminosité acquise à l'aide dudit élément de mesure de luminosité, et pour piloter en réponse la fréquence d'acquisition d'image par la matrice de capteurs 120 de sorte que la fréquence d'acquisition d'image augmente lorsque la valeur de la mesure de luminosité ambiante augmente. Ce pilotage de la fréquence d'acquisition d'image en fonction de la luminosité ambiante est de préférence mis en oeuvre en complément du pilotage de cette même fréquence en fonction de la mesure de vitesse fournie par le dispositif 140. En particulier, le dispositif de pilotage 150 peut être configuré pour fixer une fréquence nominale d'acquisition d'image en fonction de la luminosité ambiante, avec ladite fréquence nominale d'acquisition d'image qui augmente lorsque la luminosité augmente (et inversement), et avec ladite fréquence nominale d'acquisition d'image qui correspond à la fréquence d'acquisition d'image lorsque la tête de l'utilisateur est immobile relativement à la scène environnante (vitesse mesurée nulle ou inférieure à un seuil prédéterminé). Ensuite, la fréquence d'acquisition d'image est fonction de cette fréquence nominale d'acquisition d'image et de la mesure de vitesse fournie par le dispositif 140. En particulier, la fréquence d'acquisition d'image effectivement mise en oeuvre augmente relativement à ladite fréquence nominale d'acquisition d'image, lorsque la mesure de vitesse fournie par le dispositif 140 augmente. L'élément de mesure de luminosité peut être formé par un capteur annexe, tel qu'une photodiode sensible dans le visible, ou par une partie au moins de la matrice de capteurs 120. Dans ces variantes également, le dispositif de pilotage peut être configuré pour piloter en outre une luminosité de l'affichage par l'écran d'affichage, et/ou un nombre de capteurs lus sur la matrice de capteurs 120, et/ou un nombre de pixels activés sur l'écran d'affichage, en fonction de la fréquence d'acquisition d'image, laquelle dépend alors d'une fréquence nominale d'acquisition d'image qui est fonction de la luminosité ambiante.

L'invention couvre également un procédé d'ajustement d'une fréquence d'acquisition d'image mis en oeuvre dans un appareil de vision nocturne selon l'invention, et qui comprend les étapes suivantes :
- à l'aide du dispositif de mesure de vitesse, mesure d'une vitesse de l'ensemble comprenant au moins la matrice de capteurs et l'écran d'affichage ;
- à l'aide du dispositif de pilotage, pilotage de la fréquence d'acquisition d'image par la matrice de capteurs, de sorte que la fréquence d'acquisition d'image augmente lorsque ladite mesure de vitesse augmente.

L'étape de pilotage de ladite fréquence d'acquisition d'image peut réaliser un ajustement de la fréquence d'acquisition d'image à une valeur qui dépend (linéairement ou non) de la mesure de vitesse fournie par le dispositif de mesure de vitesse.

Le procédé selon l'invention peut comprendre une étape de comparaison entre la mesure de vitesse fournie par le dispositif de mesure de vitesse et une valeur seuil de vitesse, et l'étape de pilotage de ladite fréquence d'acquisition d'image peut réaliser un ajustement de la fréquence d'acquisition d'image à une première valeur basse prédéterminée lorsque ladite mesure de vitesse est inférieure à la valeur seuil de vitesse.

Le cas échéant, l'étape de pilotage de ladite fréquence d'acquisition d'image peut réaliser un ajustement de la fréquence d'acquisition d'image à une valeur haute prédéterminée, strictement supérieure à la première valeur basse prédéterminée, lorsque ladite mesure de vitesse est supérieure à la valeur seuil de vitesse.

En variante, l'étape de pilotage de ladite fréquence d'acquisition d'image peut réaliser un ajustement de la fréquence d'acquisition d'image à une valeur qui dépend (linéairement ou non) de la mesure de vitesse fournie par le dispositif de mesure de vitesse, lorsque ladite mesure de vitesse est supérieure à la valeur seuil de vitesse.

Le procédé selon l'invention peut comporter une étape de détermination d'une durée courante d'un mouvement en cours, à partir de mesures de vitesse fournies par le dispositif de mesure de vitesse, une étape de comparaison de cette durée courante à une valeur seuil de durée, avec l'étape de pilotage de ladite fréquence d'acquisition d'image qui fixe la fréquence d'acquisition d'image à une seconde valeur basse prédéterminée tant que ladite durée courante est inférieure à la valeur seuil de durée.

Le procédé selon l'invention peut mettre en oeuvre un rafraîchissement des images affichées sur l'écran d'affichage, avec la fréquence de rafraîchissement de l'image affichée sur l'écran d'affichage décorrélée de la fréquence d'acquisition d'image par la matrice de capteurs. Ladite fréquence de rafraîchissement d'image peut être égale à une valeur maximale de la fréquence d'acquisition d'image par la matrice de capteurs.

Le procédé selon l'invention peut comprendre une étape de pilotage d'une luminosité de l'affichage par l'écran d'affichage en fonction de la fréquence d'acquisition d'image, avec la luminosité qui augmente avec la fréquence d'acquisition d'image.

Le procédé selon l'invention peut comprendre une étape de pilotage d'un nombre de capteurs lus sur la matrice de capteurs en fonction de la fréquence d'acquisition d'image, avec le nombre de capteurs lus qui diminue lorsque la fréquence d'acquisition d'image augmente.

Le cas échéant, la matrice de capteurs est configurée pour mettre en oeuvre une lecture des capteurs ligne par ligne, et l'étape de pilotage de la fréquence d'acquisition d'image par la matrice de capteurs est mise en oeuvre par l'intermédiaire du pilotage d'un nombre de lignes de capteurs lues sur la matrice de capteurs.

Le procédé selon l'invention peut comprendre une étape de pilotage d'un nombre de pixels activés sur l'écran d'affichage en fonction de la fréquence d'acquisition d'image, avec le nombre de pixels activés qui diminue lorsque la fréquence d'acquisition d'image augmente.

## Revendications

1. Appareil de vision nocturne (100) destiné à être monté sur la tête d'un utilisateur (100), et comprenant :
- au moins une matrice de capteurs (120) ; et
- un écran d'affichage (130) configuré pour afficher une image obtenue à l'aide de la matrice de capteurs ;
**caractérisé en ce qu'**il comprend en outre :
- un dispositif de mesure de vitesse (140), monté solidaire d'un ensemble comprenant au moins la matrice de capteurs (120) et l'écran d'affichage (130) ; et
- un dispositif de pilotage (150), configuré pour recevoir en entrée au moins une mesure de vitesse (V(t)) fournie par le dispositif de mesure de vitesse (140), et pour piloter en réponse une fréquence d'acquisition d'image par la matrice de capteurs (120) de sorte que la fréquence d'acquisition d'image augmente lorsque ladite mesure de vitesse augmente.

2. Appareil de vision nocturne (100) selon la revendication 1, **caractérisé en ce que** le dispositif de mesure de vitesse (140) comprend au moins un capteur de vitesse de rotation.

3. Appareil de vision nocturne (100) selon la revendication 1 ou 2, **caractérisé en ce que** le dispositif de pilotage (150) est configuré pour fixer la fréquence d'acquisition d'image à une valeur qui dépend de la mesure de vitesse (V(t)) fournie par le dispositif de mesure de vitesse (140).

4. Appareil de vision nocturne (100) selon la revendication 1 ou 2, **caractérisé en ce que** le dispositif de pilotage (150) est configuré pour comparer la mesure de vitesse (V(t)) fournie par le dispositif de mesure de vitesse (140) avec une valeur seuil de vitesse (Vs), et pour fixer la fréquence d'acquisition d'image à une première valeur basse prédéterminée lorsque ladite mesure de vitesse est inférieure à la valeur seuil de vitesse.

5. Appareil de vision nocturne (100) selon la revendication 4, **caractérisé en ce que** le dispositif de pilotage (150) est configuré pour fixer la fréquence d'acquisition d'image à une valeur haute prédéterminée, strictement supérieure à la première valeur basse prédéterminée, lorsque ladite mesure de vitesse (V(t)) est supérieure à la valeur seuil de vitesse (Vs).

6. Appareil de vision nocturne (100) selon la revendication 4, **caractérisé en ce que** le dispositif de pilotage (150) est configuré pour fixer la fréquence d'acquisition d'image à une valeur qui dépend de la mesure de vitesse (V(t)) fournie par le dispositif de mesure de vitesse (140), lorsque ladite mesure de vitesse (V(t)) est supérieure à la valeur seuil de vitesse (Vs).

7. Appareil de vision nocturne (100) selon l'une quelconque des revendications 1 à 6, **caractérisé en ce que** le dispositif de pilotage (150) est configuré pour déterminer une durée courante d'un mouvement en cours, à partir de mesures de vitesse fournies par le dispositif de mesure de vitesse (140), pour comparer cette durée courante à une valeur seuil de durée, et pour fixer la fréquence d'acquisition d'image à une seconde valeur basse prédéterminée tant que ladite durée courante est inférieure à la valeur seuil de durée.

8. Appareil de vision nocturne (100) selon l'une quelconque des revendications 1 à 7, **caractérisé en ce qu'**une fréquence de rafraîchissement de l'image affichée sur l'écran d'affichage (130) est décorrélée de la fréquence d'acquisition d'image par la matrice de capteurs (120).

9. Appareil de vision nocturne (100) selon la revendication 8, **caractérisé en ce que** ladite fréquence de rafraîchissement d'image est égale à une valeur maximale de la fréquence d'acquisition d'image par la matrice de capteurs (120).

10. Appareil de vision nocturne (100) selon l'une quelconque des revendications 1 à 9, **caractérisé en ce que** le dispositif de pilotage (150) est configuré en outre pour piloter une luminosité de l'affichage par l'écran d'affichage (130) en fonction de la fréquence d'acquisition d'image, avec la luminosité qui augmente avec la fréquence d'acquisition d'image.

11. Appareil de vision nocturne (100) selon l'une quelconque des revendications 1 à 10, **caractérisé en ce que** le dispositif de pilotage (150) est configuré pour piloter un nombre de capteurs lus sur la matrice de capteurs (120) en fonction de la fréquence d'acquisition d'image, avec le nombre de capteurs lus qui diminue lorsque la fréquence d'acquisition d'image augmente.

12. Appareil de vision nocturne (100) selon la revendication 11, **caractérisé en ce que** la matrice de capteurs (120) est configurée pour mettre en oeuvre une lecture des capteurs ligne par ligne, et **en ce que** le dispositif de pilotage est configuré pour piloter la fréquence d'acquisition d'image par la matrice de capteurs par l'intermédiaire du pilotage d'un nombre de lignes de capteurs lues sur la matrice de capteurs.

13. Appareil de vision nocturne (100) selon l'une quelconque des revendications 1 à 12, **caractérisé en ce que** le dispositif de pilotage (150) est configuré pour piloter un nombre de pixels activés sur l'écran d'affichage (130) en fonction de la fréquence d'acquisition d'image, avec le nombre de pixels activés qui diminue lorsque la fréquence d'acquisition d'image augmente.

14. Appareil de vision nocturne (100) selon l'une quelconque des revendications 1 à 13, **caractérisé en ce qu'**il comporte un élément de mesure de luminosité configuré pour acquérir une mesure de luminosité ambiante, et **en ce que** le dispositif de pilotage (150) est configuré pour recevoir en entrée ladite mesure de luminosité ambiante et pour piloter en réponse ladite fréquence d'acquisition d'image par la matrice de capteurs (120) de sorte que la fréquence d'acquisition d'image augmente lorsque la valeur de ladite mesure de luminosité ambiante augmente.

15. Procédé d'ajustement d'une fréquence d'acquisition d'image mis en oeuvre dans un appareil de vision nocturne (100) selon l'une quelconque des revendications 1 à 14 monté sur la tête d'un utilisateur (200), **caractérisé en ce qu'**il comprend les étapes suivantes :
- à l'aide du dispositif de mesure de vitesse (140), mesure d'au moins une vitesse (V(t)) de l'ensemble comprenant au moins la matrice de capteurs (120) et l'écran d'affichage (130) ;
- à l'aide du dispositif de pilotage (150), pilotage de la fréquence d'acquisition d'image par la matrice de capteurs (120) de sorte que la fréquence d'acquisition d'image augmente lorsque ladite mesure de vitesse (V(t)) augmente.

## Patentansprüche

1. Nachtsichtgerät (100), das am Kopf eines Benutzers (100) angebracht wird und Folgendes umfasst:
- mindestens eine Sensoranordnung (120); und,
- einen Anzeigebildschirm (130), der so konfiguriert ist, dass er ein von der Sensoranordnung erzeugtes Bild anzeigt;
**dadurch gekennzeichnet, dass** es außerdem Folgendes umfasst:
- eine Geschwindigkeitsmessvorrichtung (140), die fest mit einer Baugruppe verbunden ist, die mindestens die Sensoranordnung (120) und den Anzeigebildschirm (130) umfasst; und
- eine Steuervorrichtung (150), die so konfiguriert ist, dass sie eingehend mindestens eine Geschwindigkeitsmessung (V(t)) empfängt, die von der Geschwindigkeitsmessvorrichtung (140) bereitgestellt wird, und als Reaktion darauf eine Bildaufnahmefrequenz durch die Sensoranordnung (120) steuert, sodass die Bildaufnahmefrequenz zunimmt, wenn die Geschwindigkeitsmessung zunimmt.

2. Nachtsichtgerät (100) nach Anspruch 1, **dadurch gekennzeichnet, dass** die Geschwindigkeitsmessvorrichtung (140) mindestens einen Drehgeschwindigkeitssensor umfasst.

3. Nachtsichtgerät (100) nach Anspruch 1 oder 2, **dadurch gekennzeichnet, dass** die Steuervorrichtung (150) so konfiguriert ist, dass sie die Bildaufnahmefrequenz auf einen Wert einstellt, der von der Geschwindigkeitsmessung (V(t)) abhängt, die von der Geschwindigkeitsmessvorrichtung (140) bereitgestellt wird.

4. Nachtsichtgerät (100) nach Anspruch 1 oder 2, **dadurch gekennzeichnet, dass** die Steuervorrichtung (150) so konfiguriert ist, dass sie die Geschwindigkeitsmessung (V(t)), die von der Geschwindigkeitsmessvorrichtung (140) bereitgestellt wird, mit einem Geschwindigkeitsschwellenwert (Vs) vergleicht und die Bildaufnahmefrequenz auf einen ersten vorbestimmten niedrigen Wert einstellt, wenn die Geschwindigkeitsmessung unter dem Geschwindigkeitsschwellenwert liegt.

5. Nachtsichtgerät (100) nach Anspruch 4, **dadurch gekennzeichnet, dass** die Steuervorrichtung (150) so konfiguriert ist, dass sie die Bildaufnahmefrequenz auf einen vorbestimmten hohen Wert einstellt, der strikt höher als der erste vorbestimmte niedrige Wert ist, wenn die Geschwindigkeitsmessung (V(t)) über dem Geschwindigkeitsschwellenwert (V(t)) liegt.

6. Nachtsichtgerät (100) nach Anspruch 4, **dadurch gekennzeichnet, dass** die Steuervorrichtung (150) so konfiguriert ist, dass sie die Bildaufnahmefrequenz auf einen Wert einstellt, der von der Geschwindigkeitsmessung (V(t)) abhängt, die von der Geschwindigkeitsmessvorrichtung (140) bereitgestellt wird, wenn die Geschwindigkeitsmessung (V(t)) über dem Geschwindigkeitsschwellenwert (V(t)) liegt.

7. Nachtsichtgerät (100) nach einem der Ansprüche 1 bis 6, **dadurch gekennzeichnet, dass** die Steuervorrichtung (150) so konfiguriert ist, dass sie anhand von Geschwindigkeitsmessungen, die von der Geschwindigkeitsmess-vorrichtung (140) bereitgestellt werden, eine derzeitige Dauer einer laufenden Bewegung bestimmt, diese derzeitige Dauer mit einem Dauerschwellenwert vergleicht und die Bildaufnahmefrequenz auf einen zweiten vorbestimmten niedrigen Wert einstellt, solange die derzeitige Dauer unter dem Dauerschwellenwert liegt.

8. Nachtsichtgerät (100) nach einem der Ansprüche 1 bis 7, **dadurch gekennzeichnet, dass** eine Aktualisierungsfrequenz des Bildes, das auf dem Anzeigebildschirm (130) angezeigt wird, nicht mit der Frequenz der Bildaufnahme durch die Sensoranordnung (120) korreliert.

9. Nachtsichtgerät (100) nach Anspruch 8, **dadurch gekennzeichnet, dass** die Bildaktualisierungsfrequenz einem Maximalwert der Bildaufnahmefrequenz durch die Sensoranordnung (120) entspricht.

10. Nachtsichtgerät (100) nach einem der Ansprüche 1 bis 9, **dadurch gekennzeichnet, dass** die Steuervorrichtung (150) ferner so konfiguriert ist, dass sie eine Helligkeit der Anzeige vom Anzeigebildschirm (130) in Abhängigkeit von der Bildaufnahmefrequenz steuert, wobei die Helligkeit mit der Bildaufnahmefrequenz zunimmt.

11. Nachtsichtgerät (100) nach einem der Ansprüche 1 bis 10, **dadurch gekennzeichnet, dass** die Steuervorrichtung (150) so konfiguriert ist, dass sie eine Anzahl von ausgelesenen Sensoren auf der Sensoranordnung (120) in Abhängigkeit von der Bildaufnahmefrequenz steuert, wobei die Anzahl der ausgelesenen Sensoren mit zunehmender Bildaufnahmefrequenz abnimmt.

12. Nachtsichtgerät (100) nach Anspruch 11, **dadurch gekennzeichnet, dass** die Sensoranordnung (120) so konfiguriert ist, dass die Sensoren nach Zeilen ausgelesen werden, und dass die Steuervorrichtung so konfiguriert ist, dass die Bildaufnahmefrequenz der Sensoranordnung über die Steuerung einer Anzahl von ausgelesenen Sensorzeilen aus der Sensoranordnung eingestellt wird.

13. Nachtsichtgerät (100) nach einem der Ansprüche 1 bis 12, **dadurch gekennzeichnet, dass** die Steuervorrichtung (150) so konfiguriert ist, dass sie eine Anzahl von aktivierten Pixeln auf dem Anzeigebildschirm (130) in Abhängigkeit von der Bildaufnahmefrequenz steuert, wobei die Anzahl der aktivierten Pixel mit zunehmender Bildaufnahmefrequenz abnimmt.

14. Nachtsichtgerät (100) nach einem der Ansprüche 1 bis 13, **dadurch gekennzeichnet, dass** es ein Helligkeitsmesselement umfasst, das so konfiguriert ist, dass es eine Umgebungslichtmessung durchführt, und dass die Steuervor-richtung (150) so konfiguriert ist, dass sie die Umgebungslichtmessung als Eingang aufnimmt und als Reaktion darauf die Bildaufnahmefrequenz durch die Sensoranordnung (120) so steuert, dass die Bildaufnahmefrequenz zunimmt, wenn der Messwert des Umgebungslichts ansteigt.

15. Verfahren zur Anpassung der Bildaufnahme, das in einem Nachtsichtgerät (100) nach einem der Ansprüche 1 bis 14 implementiert wird und am Kopf eines Benutzers (200) angebracht ist, **dadurch gekennzeichnet, dass** es folgende Schritte umfasst:
- Messung mithilfe der Geschwindigkeitsmessvorrichtung (140) mindestens einer Geschwindigkeit (V(t)) der Anordnung, die mindestens die Sensoranordnung (120) und den Anzeigebildschirm (130) umfasst;
- Steuerung der Bildaufnahmefrequenz der Sensoranordnung (120) mithilfe der Steuervorrichtung (150), so dass die Bildaufnahmefrequenz steigt, wenn die Geschwindigkeitsmessung (V(t)) zunimmt.

## Claims

1. Night vision device (100) intended to be mounted on the head of a user (100), and comprising:
- at least one sensor array (120); and
- a display screen (130) configured to display an image obtained using the sensor array;
**characterised in that** it further comprises:
- a speed measuring device (140), mounted integral with an assembly comprising at least the sensor array (120) and the display screen (130); and
- a control device (150), configured to receive as input at least one speed measurement (V(t)) provided by the speed measuring device (140), and to control in response a frequency of image acquisition by the sensor array (120) so that the frequency of image acquisition increases when said speed measurement increases.

2. Night vision device (100) according to claim 1, **characterised in that** the speed measuring device (140) comprises at least one rotation speed sensor.

3. Night vision device (100) according to claim 1 or 2, **characterised in that** the control device (150) is configured to set the frequency of image acquisition at a value that depends on the speed measurement (V(t)) provided by the speed measuring device (140).

4. Night vision device (100) according to claim 1 or 2, **characterised in that** the control device (150) is configured to compare the speed measurement (V(t)) provided by the speed measuring device (140) with a speed threshold value (Vs), and to set the frequency of image acquisition at a first predetermined low value when said speed measurement is lower than the speed threshold value.

5. Night vision device (100) according to claim 4, **characterised in that** the control device (150) is configured to set the frequency of image acquisition at a predetermined high value, strictly higher than the first predetermined low value, when said speed measurement (V(t)) is greater than the speed threshold value (Vs).

6. Night vision device (100) according to claim 4, **characterised in that** the control device (150) is configured to set the frequency of image acquisition at a value that depends on the speed measurement (V(t)) provided by the speed measuring device (140), when said speed measurement (V(t)) is greater than the speed threshold value (Vs).

7. Night vision device (100) according to any one of claims 1 to 6, **characterised in that** the control device (150) is configured to determine a current duration of a movement in progress, from speed measurements provided by the speed measuring device (140), to compare said current duration with a duration threshold value, and to set the frequency of image acquisition at a second predetermined low value so long as said current duration is lower than the duration threshold value.

8. Night vision device (100) according to any one of claims 1 to 7, **characterised in that** a frequency of image refresh of the image displayed on the display screen (130) is decorrelated from the frequency of image acquisition by the sensor array (120).

9. Night vision device (100) according to claim 8, **characterised in that** said frequency of image refresh is equal to a maximum value of the frequency of image acquisition by the sensor array (120).

10. Night vision device (100) according to any one of claims 1 to 9, **characterised in that** the control device (150) is further configured to control a brightness of the display by the display screen (130) depending on the frequency of image acquisition, with the brightness that increases with the frequency of image acquisition.

11. Night vision device (100) according to any one of claims 1 to 10, **characterised in that** the control device (150) is configured to control a number of sensors read on the sensor array (120) depending on the frequency of image acquisition, with the number of sensors read that decreases when the frequency of image acquisition increases.

12. Night vision device (100) according to claim 11, **characterised in that** the sensor array (120) is configured to implement a reading of the sensors row by row, and **in that** the control device is configured to control the frequency of image acquisition by the sensor array by means of the control of a number of rows of sensors read on the sensor array.

13. Night vision device (100) according to any one of claims 1 to 12, **characterised in that** the control device (150) is configured to control a number of pixels activated on the display screen (130) depending on the frequency of image acquisition, with the number of pixels activated that decreases when the frequency of image acquisition increases.

14. Night vision device (100) according to any one of claims 1 to 13, **characterised in that** it includes a luminosity measuring element configured to acquire an ambient luminosity measurement, and **in that** the control device (150) is configured to receive as input said ambient luminosity measurement and to control in response said frequency of image acquisition by the sensor array (120) so that the frequency of image acquisition increases when the value of said ambient luminosity measurement increases.

15. Method for adjusting a frequency of image acquisition, implemented in a night vision device (100) according to any one of claims 1 to 14 mounted on the head of a user (200), **characterised in that** it comprises the steps of:
- using the speed measuring device (140), measuring at least one speed (V(t)) of the assembly comprising at least the sensor array (120) and the display screen (130);
- using the control device (150), controlling the frequency of image acquisition by the sensor array (120) so that the frequency of image acquisition increases when said speed measurement (V(t)) increases.
